# EUROPEAN PATENT SPECIFICATION

(11) **EP 0 747 400 B1**
(45) Date of publication and mention of the grant of the patent: **08.09.1999**
(21) Application number: 96109010.7
(22) Date of filing: 05.06.1996
(51) Int. Cl.: C08F 10/00, C08F 4/654

(54) **Alpha-olefin polymerization catalyst and process for producing alpha-olefin polymer**
Katalysator für die Alpha-Olefinpolymerisation und Verfahren zur Herstellung von Alpha-Olefin-Polymer
Catalyseur pour polymérisation d'oléfines et procédé de préparation de polymères d'alpha-oléfine

(30) Priority: 07.06.1995 JP 14043395
(43) Date of publication of application: 11.12.1996
(73) Proprietor: SUMITOMO CHEMICAL COMPANY LIMITED, Osaka-shi, Osaka 541-0041 (JP)
(72) Inventor: Fujiwara, Yasuki, Sodegaura-shi, Chiba (JP); Kiyota, Teruyoshi, Ichihara-shi, Chiba (JP); Ebara, Takeshi, Ichihara-shi, Chiba (JP); Imai, Akio, Ichihara-shi, Chiba (JP)
(74) Representative: VOSSIUS & PARTNER

(56) References cited:
- EP-A- 0 246 599
- EP-A- 0 283 011
- EP-A- 0 376 084
- EP-A- 0 657 473

## Description

The present invention relates to an α-olefin polymerization catalyst and a process for producing an α-olefin polymer. Particularly, the present invention relates to an α-olefin polymerization catalyst giving a highly stereoregular α-olefin polymer having an extremely small catalyst residue and amorphous polymer and having excellent mechanical properties and processability, and having an extremely high catalytic activity per a solid catalyst and per a titanium atom in a process such as slurry polymerization, bulk polymerisation, or gas phase polymerization, and a process for producing a highly stereoregular α-olefin polymer with said catalyst.

As a process for producing a polymer of α-olefin such as propylene, or butene-1, it is well known that the so-called Ziegler-Natta catalyst comprising a transition metal compound of the 4th to 6th Groups and a organometallic compound of the 1st, 2nd and 13th Groups in the Periodic Table is used.

In the production of α-olefin polymers, an amorphous polymer is formed as by-product in addition to a highly stereoregular α-olefin polymer having a high value in industrial application. This amorphous polymer has little value in industrial application and effects largely a bad influence on mechanical properties, when the α-olefin polymer is molded to a molded article, a film, a fiber and other fabricated goods to be used. The formation of the amorphous polymer causes the loss of raw material monomers and at the same time, an apparatus for removing the amorphous polymer becomes necessary to cause an extremely large disadvantage from an industrial viewpoint. Therefore, it is necessary that a catalyst for producing an α-olefin polymer forms no amorphous polymer or forms rarely small amounts.

In the α-olefin polymer obtained, a residue of catalyst comprising a transition metal compound and an organometallic compound remains. As this catalyst residue causes problems in the various points such as stability, and processability of the α-olefin polymer, an apparatus for removing the catalyst residue thereby stabilizing the polymer becomes necessary. As this defect can be improved by enlarging the catalyst activity represented by the weight of the α-olefin polymer produced per the unit weight of a catalyst, the above-mentioned apparatus for removing the catalyst residue becomes unnecessary and the reduction of the manufacturing cost of α-olefin polymers also becomes possible.

It is known that highly stereoregular and highly active polymerization of α-olefin can be realized to a certain extent by using a Ti-Mg complex type solid catalyst obtained by reducing a tetra-valent titanium compound with an organomagnesium compound in the presence of an organosilicon compound and forming the magnesium-titanium eutectic mixture, in combination with a organoaluminum compound of a promotor and a organosilicon compound as a third component in polymerization JP-B-3-43283(1991) and 1-319508(1989))

In any case, a non-extraction and non-deashing process is in a possible level, but furthermore, a further improvement is desired. In the concrete, in order to produce an α-olefin polymer of high quality, the realization of further highly stereoregular polymerization without sacrificing the particle size distribution and the like is desired. Particularly, in a use such as a field for molding wherein it is desired to make a polymer be in high rigidity, a highly stereoregular polymer brings directly out the quality of a high rigidity, and therefore, the appearance of a catalyst having a further highly stereo-regular polymerizability is acutely desired. When a solid catalyst such as a Ziegler-Natta catalyst is industrially provided in practical use, the particle shape is extremely important for controlling the bulk density, particle size and flowability of a polymer. Concerning the improvement of this particle shape, a trial to overcome this problem by using a solid catalyst obtained by depositing a titanium-magnesium compound on a silica gel in polymerizing ethylene JP-A-54-148098(1979) and 56-47407(1981)).

It is proposed that, in the polymerization of polypropylene, a particle property is remarkably improved by using a solid catalyst impregnating a titanium-magnesium compound in a silica gel JP-A-62-256802 (1987)). According to this method, a remarkable improvement in the particle shape is surely recognized. However, as a silicagel used for support remains much in the product, it causes the formation of fish-eye in a film use and is not necessarily preferred in quality.

Further, it is proposed in JP-A-63-289004 that an α-olefin polymerization catalyst comprising:
(A) a solid catalyst component containing a tri-valent titanium compound obtained by treating a solid product obtained by reducing Ti(OR¹)ₐX₄₋ₐ ( R¹ represents a hydrocarbon group having 1 to 20 carbons, X represents a halogen atom and a represents a number satisfying 0 < a ≦ 4) with an organomagnesium compound in the presence of an organosilicon compound having an Si-O bond and porous polymer beads having a micro pore radius of 100 to 5000 Å (1 Å = 0.1 nm) and a micro pore volume of 0.1cc/g 1 cc/g = 1 cm³/g) or more, with an ester compound and successively, with a mixture of an ether compound and titanium tetrachloride;
(B) an organoaluminum compound; and
(C) an electron donative compound, improves remarkably the particle shape of an α-olefin polymer obtained without containing an inorganic oxide causing the formation of fish-eye.

However, a further improvement in the catalyst activity and the stereoregularity of the α-olefin polymer to be produced is desired in this method, too.

An object of the present invention is to provide an α-olefin polymerization catalyst providing an α-olefin polymer of high stereoregularity having a high bulk density and a little fine powder and not containing an inorganic oxide such as a silicagel causing the formation of fish-eye in a film use, and having a high catalyst activity enough to be unnecessary for removing a catalyst residue and an amorphous polymer, and a process for producing an α-olefin polymer of high quality having a high stereoregularity.

According to the present invention, there are provided an α-olefin polymerization catalyst comprising:
(A) a solid catalyst component containing a tri-valent titanium compound obtained by treating a solid product obtained by reducing Ti(OR¹)ₐX₄₋ₐ ( R¹ represents a hydrocarbon group having 1 to 20 carbons, X represents a halogen atom and a represents a number satisfying 0 < a ≦ 4) with an organomagnesium compound in the presence of an organosilicon compound having an Si-O bond, porous polymer beads having a pore radius of 10 to 500 nm (100 to 5000 Å) and a pore volume of 0,1 cm³/g (0.1cc/g) or more and an ester compound, with an ester compound and successively, with a mixture of an ether compound and titanium tetrachloride or a mixture of an ether compound, titanium tetrachloride and an ester compound;
(B) an organoaluminum compound; and
(C) an electron-donating compound, and a process for producing an α-olefin polymer homopolymerizing or copolymerizing an α-olefin with another α-olefin with said catalyst.

By using the present catalyst, the fore-mentioned object and particularly, the highly stereo-regular polymerization of an α-olefin is attained. The present invention is explained in detail below.

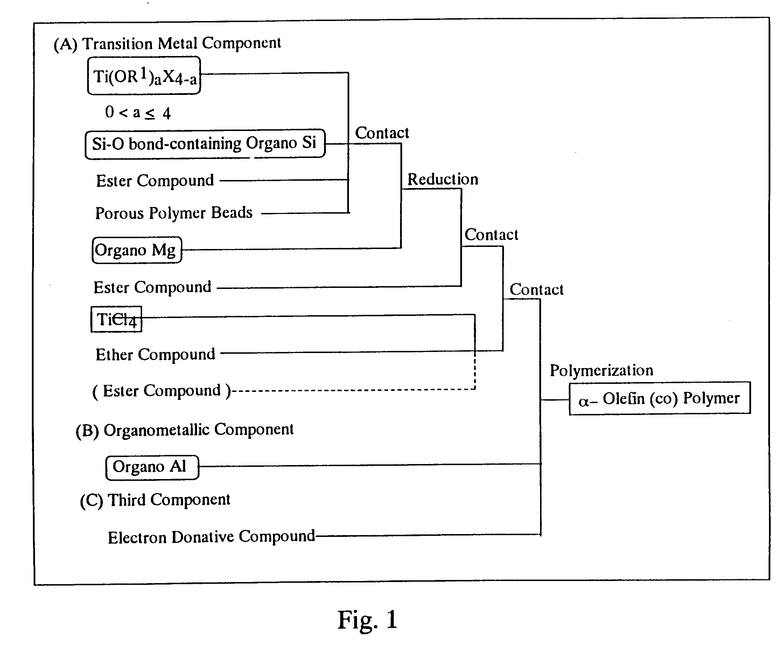

Fig.1 is a flow-chart for facilitating the understanding of the present invention. The flow-chart is a representative of embodiments of the present invention.

### (a) Titanium compound

As the titanium compound used for the synthesis of the solid catalyst component (A) in the present invention, titanium compounds represented by the general formula Ti(OR¹)ₐX₄₋ₐ ( R¹ represents a hydrocarbon group having 1 to 20 carbons, X represents a halogen atom and a represents a number satisfying 0 < a ≦ 4.) are illustrated. The example of R¹ includes an alkyl group such as methyl, ethyl, propyl, isopropyl, butyl, isobutyl, tert-butyl, amyl, iso-amyl, tert-amyl, hexyl, heptyl, octyl, decyl, or dodecyl; an aryl group such as phenyl, cresyl, xylyl, or naphthyl; an alkenyl group such as propenyl; or an aralkyl group such as benzyl. Among these, an alkyl group having 2 to 18 carbon atoms and an aryl group having 6 to 18 carbon atoms are preferred. Particularly, a straight chain alkyl group having 2 to 18 carbon atoms is preferred. A titanium compounds having 2 or more different OR¹ groups each other can be used.

The examples of the halogen atom represented by X can include chlorine, bromine or iodine. Among these, particularly chlorine gives a preferable result.

The value of a in the titanium compound represented by the general formula Ti(OR¹)ₐX₄₋ₐ is a number satisfying 0 < a ≦ 4, preferably 2 ≦ a ≦ 4 and particularly preferably a=4.

As the synthetic method of the titanium compound represented by the general formula Ti(OR¹)ₐX₄₋ₐ, a well-known method can be used. For example, a method reacting Ti(OR¹)₄ with Ti X₄ in the predetermined ratio or a method reacting Ti X₄ with the predetermined amount of a corresponding alcohol (R¹OH) can be used. These titanium compounds may be used as solution diluted in a hydrocarbon compound or a halogenated hydrocarbon compound.

Examples of the titanium compound represented by the general formula Ti(OR¹)ₐX₄₋ₐ include alkoxytitanium trihalide compounds such as methoxytitanium trichloride, ethoxytitanium trichloride, butoxytitanium trichloride, phenoxytitanium trichloride, and ethoxytitanium tribromide; dialkoxytitanium dihalide compounds such as dimethoxytitanium dichloride, diethoxytitanium dichloride dibuthoxytitanium dichloride, diphenoxytitanium dichloride, and diethoxytitanium dibromide; trialkoxytitanium monohalide compounds such as trimethoxytitanium chloride, triethoxytitanium chloride, tributoxytitanium chloride, triphenoxytitanium chloride, and triethoxytitanium bromides; tetraalkoxytitanium compounds such as tetramethoxytitanium, tetraethoxytitanium, tetrabutoxytitanium, and tetraphenoxytitanium.

### (b) Organosilicon compound having Si-O bond

Examples of the organosilicon compound having an Si-O bond in its molecule used in the synthesis of the solid catalyst component in the present invention, include the ones represented by the following general formulae

Si(OR²)ₘR³₄₋ₘ;

R⁴(R⁵₂SiO)ₚSiR⁶₃; and

(R⁷₂SiO)_{q}

wherein R² is a hydrocarbon group having 1 to 20 carbon atoms, each R³, R⁴, R⁵, R⁶ and R⁷ is a hydrocarbon group having 1 to 20 carbon atoms or hydrogen, m is a number satisfying 0 < m ≦ 4, p is an integer of 1 to 1000 and q is an integer of 2 to 1000.

The examples of the organosilicon compound include tetramethoxysilane, dimethyldimethoxysilane, tetraethoxysilane, triethoxyethylsilane, diethoxydiethylsilane, ethoxytriethylsilane, tetraisopropoxysilane, diisopropoxydiisopropylsilane, tetrapropoxysilane, dipropoxydipropylsilane, tetrabuthoxysilane, dibuthoxydibutylsilane, dicyclopentoxydiethylsilane, diethoxydiphenylsilane, cyclohexyloxytrimethylsilane, phenoxytrimethylsilane, tetraphenoxysilane, triethoxyphenylsilane, hexamethyldisiloxane, hexaethyldisiloxane, hexapropyldisiloxane, octaethyltrisiloxane, dimethylpolysiloxane, diphenylpolysiloxane, methylhydropolysiloxane, and phenylhydropolysiloxane.

Among these organosilicon compounds, alkoxysilane compounds represented by the following general formula Si(OR²)ₘR³₄₋ₘ are preferred wherein 1≤m≤4 is preferred and particularly, tetraalkoxysilane compounds of m=4 are preferred.

### (c) Porous polymer beads

Examples of the porous polymer beads used in the component(A) of the present invention include porous polymer beads such as polystyrenes, polyacrylates, polymethacrylates, polyacrylonitriles, polyvinyl chlorides and polyolefines. Concrete examples include polystyrene, styrene-divinylbenzene copolymer, styrene-N,N'-alkylene dimethacrylamide copolymer, styrene-ethyleneglycol methyldimethacrylate copolymer, polymethylacrylate, polyethylacrylate, methylacrylate-divinylbenzene copolymer, ethylacrylate-divinylbenzene copolymer, polymethylmethacrylate, methylmethacrylate-divinylbenzene copolymer, polyethyleneglycol dimethylmethacrylate, polyacrylonitrile, acrylonitrile-divinylbenzene copolymer, polyvinyl chloride, polyvinyl pyrolidine, polyvinyl pyridine, ethylvinylbenzene-divinylbenzene copolymer, polyethylene, ethylene-methyl acrylate copolymer, and polypropylene. Among these porous polymer beads, porous polymer beads such as polystyrenes, polyvinyl chlorides, polyolefins and polyacrylonitriles are preferably used and more preferably, polystyrene, styrene-divinylbenzene copolymer and polyvinyl chloride are used. The average particle diameter of the porous polymer beads is preferably 5 to 1,000 µ (1 µ = 1 µm), more preferably 10 to 600µ and particularly preferably 15 to 500 µ. And, the micropore volume in a micropore radius between 100 to 5,000 Å is 0.1cc/g or more, preferably 0.2cc/g or more and particularly preferably 0.25cc/g or more. Furthermore, it is preferred to use the porous polymer beads from which adsorbed water has been removed. In the concrete, it is dried under vacuum at a temperature of 80°C or more, or a method treating the one dried at a temperature of 60°C or more with an organometallic compound such as an organomagnesium to be used are mentioned.

### (d) Ester compound

As the ester compound used in the present invention, mono- and polyvalent carboxylates are used, and the examples can include saturated aliphatic carboxylates, unsaturated aliphatic carboxylates, alicyclic carboxylates and aromatic carboxylates. Concrete examples include methyl acetate, ethyl acetate, phenyl acetate, methyl propionate, ethyl propionate, ethyl butyrate, ethyl valerate, methyl acrylate, ethyl acrylate, methyl methacrylate, ethyl benzoate, butyl benzoate, methyl toluate, ethyl toluate, ethyl methoxybenzoate, diethyl succinate, dibutyl succinate, diethylmalonate, dibutyl malonate, dimethyl maleate, dibutyl maleate, diethyl itaconate, dibutyl itaconate, monoethyl phthalate, dimethyl phthalate, methylethyl phthalate, diethylphthalate, di-n-propyl phthalate, diisopropyl phthalate, di-n-butyl phthalate, diisobutyl phthalate, di-n-octyl phthalate, and diphenyl phthalate.

Among these ester compounds, an unsaturated aliphatic carboxylate such as methacrylates, and maleates and phthalates are preferred, and particularly, diesters of phthalic acid are preferably used.

### (e) Organomagnesium compound

As the organomagnesium compound used in the present invention, any organomagnesium compounds having an Mg-carbon bond in its molecule can be used.
Particularly, Grignards compound represented by the general formula R⁸MgX (wherein R⁸ represents a hydrocarbon group having 1 to 20 carbon atoms and X represents a halogen) and a dialkyl magnesium compound or a diaryl magnesium compound represented by the general formula:
R⁹R¹⁰Mg (wherein each R⁹ and R¹⁰ represents a hydrocarbon group having 1 to 20 carbon atoms) are preferably used. R⁸, R⁹ and R¹⁰ may be the same or different and the examples include one such as alkyl groups, aryl groups, aralkyl groups and alkenyl groups having 1 to 20 carbon atoms such as methyl, ethyl, propyl, isopropyl, butyl, sec-butyl, amyl, isoamyl, hexyl, octyl, 2-ethylhexyl, phenyl, and benzyl.

The examples of the Grignard compound include methylmagnesium chloride, ethylmagnesium chloride, ethylmagnesium bromide, ethylmagnesium iodide, propylmagnesium chloride, propylmagnesium bromide, butylmagnesiumchloride, butylmagnesium bromide, sec-butylmagnesium chloride, sec-butylmagnesium bromide, t-butylmagnesium chloride, t-butylmagnesium bromide, amylmagnesium chloride, isoamylmagnesium chloride hexylmagnesium chloride, phenylmagnesium chloride, and phenylmagnesium bromide, and the compounds represented by the general formula R⁹R¹⁰Mg include dimethylmagnesium, diethylmagnesium, dipropylmagnesium, diisopropylmagnesium, dibutylmagnesium, di-sec-butylmagnesium, di-tert-butylmagnesium, butyl-sec-butylmagnesium, diamylmagnesium, dihexylmagnesium, diphenylmagnesium, and butylethylmagnesium.

As a solvent for synthesizing the above-mentioned organomagnesium compound, an ether solvent such as diethyl ether, dipropyl ether, diisopropyl ether, dibutyl ether, diisobutyl ether, diamyl ether, diisoamyl ether, dihexyl ether, dioctyl ether, diphenyl ether, dibenzyl ether, phenetole, anisole, or tetrahydrofuran can be used. A hydrocarbon solvent such as hexane, heptane, octane, cyclohexane, methylcyclohexane, benzene, toluene, or xylene, or a mixed solvent of the ether and the hydrocarbon may be used.

It is preferred to use the organomagnesium compound in the condition of an ether solution and as the ether solution, an ether compound having 6 or more carbon atoms in molecule or a cyclic ether compound is used. A Grignard compound represented by the general formula R⁸MgX is preferably used as an ether solution from the point of the catalyst ability. Further, the complex of the above-mentioned organomagnesium compound and an organometallic compound soluble in a hydrocarbon can be used. As an example of such organometallic compound, an organic compound of Li, Be, B, Al or Zn is mentioned.

### (f) Ether compound

As the ether compound used in the present invention, dialkyl ethers such as diethyl ether, dipropyl ether, diisopropyl ether, dibutyl ether, diisobutyl ether, diamyl ether, diisoamyl ether, dineopenyl ether, dihexyl ether, dioctyl ether, methylbutyl ether, methylisoamyl ether, and ethylisobutyl ether are mentioned. Among these, dibutyl ether and diisoamyl ether are particularly preferred.

### (g) Synthesis of solid catalyst component

The solid catalyst component of the present invention is synthesized by treating a solid product obtained by reducing the titanium compound by the organomagnesium compound in the presence of the porous polymer beads, the organosilicon compound and the ester compound, with the ester compound and successively, with the mixture of the ether compound and titanium tetrachloride or the mixture of the ether compound, titanium tetrachloride and the ester compound. All these synthetic reactions are carried out under an atmosphere of an inert gas such as nitrogen, or argon.

The solid product is synthesized by reducing the titanium compound by the organomagnesium compound in the presence of the porous polymer beads, the organosilicon compound and the ester compound, and at that time, the deposition of the solid by the reduction is formed in the porous polymer beads particles. The solid product retains the shape of the porous polymer beads and it is preferred that fine particles are not formed.

As a method of the reduction of the titanium compound by the organomagnesium compound, either a method adding the organomagnesium compound to the mixture of the titanium compound, the organosilicon compound, the porous polymer beads and the ester compound, or a method adding inversely the mixture of the titanium compound, the organosilicon compound and the ester compound to the mixture of the organomagnesium compound solution and the porous polymer beads is good. Among these, the method adding the organomagnesium compound to the mixture of the titanium compound, the organosilicon compound, the porous polymer beads and the ester compound is preferred from the viewpoint of the catalyst activity.

The titanium compound, the organosilicon compound, the porous polymer beads and the ester compound are preferably used in the solution in or dilution with a suitable solvent. Such a solvent includes aliphatic hydrocarbons such as hexane, heptane, octane, and decane; aromatic hydrocarbon atoms such as toluene, and xylene; alicyclic hydrocarbons such as cyclohexane, methylcyclohexane, and decalin; ether compounds such as diethyl ether, dibutyl ether, diisoamyl ether, and tetrahydrofuran.

The reduction temperature is -50 to 70°C, preferably - 30 to 50°C and particularly preferably -25 to 35°C. When the reduction temperature is too high, the catalyst activity becomes low.

The dropwise addition time is not specifically restricted and is 30 minutes to 12 hours. After completion of the reduction, the post reaction may be carried out at a temperature of 20 to 120°C.

The amount of the organosilicon compound used is preferably 1 to 50, more preferably 3 to 30 and particularly preferably 5 to 25 in terms of an atomic ratio of the silicon atom to the titanium atom in the titanium compound (Si/Ti). The amount of the ester compound used is preferably 0.05 to 10, more preferably 0.1 to 6 and particularly preferably 0.2 to 3 in terms of molar ratio of the ester compound to the titanium atom of the titanium compound (ester compound/Ti). Furthermore, the amount of the organomagnesium compound used is preferably 0.1 to 10, more preferably 0.2 to 5.0 and particularly preferably 0.2 to 2.0 in terms of the atomic ratio of the sum of the silicon atom and the titanium atom to the magnesium atom (Ti+Si/Mg). The amount of the porous polymer beads used is preferably 20 to 95% by weight and more preferably 30 to 85% by weight based on the weight of the solid product.

The solid product obtained by the reduction is separated by solid-liquid separation and washed several times by an inert hydrocarbon solvent such as hexane, and heptane.

Next, the solid product obtained by the above-mentioned method is treated with the ester compound. The amount of the ester compound used is preferably 0.1 to 50mol, more preferably 0.3 to 20mol and particularly preferably 0.5 to 10mol per 1mol of the titanium atom of the solid product. The amount of the ester compound used per 1mol of the magnesium atom of the solid product is preferably 0.01 to 1.0mol and more preferably 0.03 to 0.5mol.

The treatment of the solid product with the ester compound can be carried out by any of well-known methods capable of contacting the solid product with the ester compound such as a slurry method or a mechanical pulverization means by e.g. a ball-mill. However, when the mechanical pulverization is applied, finely ground particles from the solid catalyst component are formed in a large amount, and the particle size distribution becomes broad, and it is not preferable from the industrial point of view, and it is preferred to contact both in the presence of a diluent.

As the diluent, aliphatic hydrocarbons such as pentane, hexane, heptane, or octane, aromatic hydrocarbons such as benzene, toluene, or xylene, alicyclic hydrocarbons such as cyclohexane, or cyclopentane, halogenated hydrocarbons such as 1,2- dichloroethane, or monochlorobenzene can be used.
Among these, the aromatic hydrocarbon and the halogenated hydrocarbon are particularly preferred.

The amount of the diluent used is preferably 0.1ml to 1000ml and more preferably 1ml to 100ml per 1g of the solid product. The treatment temperature is preferably -50 to 150°C and more preferably 0 to 120°C. The treatment time is preferably 5 minutes or more and more preferably 15 minutes to 3 hours. After completion of the treatment, the treated solid is allowed to stand to separate the solid from the liquid and successively, washed several times by an inert solvent to obtain the solid treated with the ester.
Next, the solid treated with the ester is treated with the mixture of the ether compound and titanium tetrachloride. This treatment is preferably carried out in the state of the slurry. The solvent used for slurring includes aliphatic hydrocarbons such as pentane, hexane, heptane, octane, and decane, aromatic hydrocarbons such as toluene, and xylene, alicyclic hydrocarbon such as cyclohexane, methylcyclohexane, decalin, halogenated hydrocarbons such as dichloroethane, trichloroethylene, monochlorobenzene, dichlorobenzene, and trichlorobenzene. Among these, the halogenated hydrocarbon and the aromatic hydrocarbon are preferred.

The slurry concentration is preferably 0.05 to 0.7g solid/ml-solvent and more preferably 0.1 to 0.5g solid/ml-solvent. The reaction temperature is preferably 30 to 150°C, more preferably 45 to 135°C and particularly preferably 60 to 120°C. The reaction time is particularly not restricted. However, a period of 30 minutes to 6 hours is usually preferred.

As the method feeding the solid treated with the ester, the ether compound and titanium tetrachloride, either of a method adding the ether compound and titanium tetrachloride to the ester-treated solid, or a method inversely adding the ester-treated solid to the solution of the ether compound and titanium tetrachloride may be effected. In the method adding the ether compound and titanium tetrachloride to the ester-treated solid, a method adding titanium tetrachloride after adding the ether compound, or a method adding the ether compound and titanium tetrachloride at the same time is preferred, and particularly, a method adding the mixture of the ether compound and titanium tetrachloride previously prepared to the ester-treated solid is preferred.

The reaction of the ester-treated solid with the ether compound and titanium tetrachloride may be repeated twice or more. From the view point of catalyst activity and stereoregularity, it is preferable to repeat at least two times the reaction with the mixture of the ether compound and titanium tetrachloride.

The amount of the ether compound used is preferably 0.1 to 100mol, more preferably 0.5 to 50mol and particularly preferably 1 to 20mol per 1mol of the titanium atom contained in the solid product. The amount of titanium tetrachloride used is preferably 1 to 1000mol, more preferably 3 to 500mol and particularly preferably 10 to 300mol per 1mol of a titanium atom contained in the solid product. The amount of titanium tetrachloride used is preferably 1 to 100mol, more preferably 1.5 to 75mol and particularly preferably 2 to 50mol per 1mol of the ether compound.

In the treatment of the ester-treated solid with the mixture of the ether compound and titanium tetrachloride, the ester compound may coexist. The amount of the ester compound used is preferably 30mol or less, more preferably 15mol or less and particularly preferably 5mol or less per 1mol of the titanium atom contained in the solid product.

The solid catalyst containing a tri-valent titanium compound obtained by the above-mentioned method is subjected to solid-liquid separation and successively, washed several times with an inert solvent such as hexane, heptane or the like to be used for polymerization. From the view point of catalytic activity and stereoregularity, it is preferable that after solid-liquid separation, the solid catalyst was washed once or more at a temperature of 50 to 120°C with a large amount of a halogenated hydrocarbon solvent such as monochlorobenzene or an aromatic hydrocarbon solvent such as toluene, then further washed several times with an aliphatic hydrocarbon solvent such as hexane, or heptane, and thereafter used in polymerization.

### (h) Organoaluminum compound (B)

The organoaluminum compound used in the present invention has at least one Al-carbon bond in a molecule. The representatives thereof are organoaluminum compounds represented by the general formulae:

R¹¹_{γ}AlY_{3-γ} and

R¹²R¹³Al-O-AlR¹⁴R¹⁵

wherein R¹¹ to R¹⁵ represent a hydrocarbon group having 1 to 20 carbon atoms, Y represents a halogen, hydrogen or an alkoxy group and γ is a number satisfying 2 ≦ γ ≦ 3.

The examples of the organoaluminum compound include trialkylaluminums such as triethylaluminum, triisobutylaluminum, and trihexylaluminum; dialkylaluminum hydrides such as diethylaluminum hydride, and diisobutylaluminum hydride; dialkylaluminum halides such as diethylaluminum chloride; the mixtures of a trialkylaluminums and a dialkylaluminum halide such as a mixture of triethylaluminum and diethylaluminum chloride; alkylalumoxanes such as tetraethyldialumoxane, and tetrabutyldialumoxane.

Among these organoaluminum compounds, trialkylaluminums, mixtures of a trialkylaluminum and a dialkylaluminum halide and alkylaluminoxanes are preferred, and particularly, triethylaluminum, triisobutylaluminum, the mixture of triethylaluminum and diethylaluminum chloride, and tetraethyldialumoxane are preferred.

The amount of the organoaluminum compound used can be selected in a wide range as 0.5 to 1000mol per 1mol of the titanium atom contained in the solid catalyst, and the range of 1 to 600mol is particularly preferred.

### (c) Electron-donative compound (C)

As the electron-donative compound used for polymerization in the present invention, electron donors containing oxygen such as alcohols, phenols, ketones, aldehydes, carboxylic acids, esters of organic acids and inorganic acids, ethers, acid amides, and acid anhydrides; and electron donors containing nitrogen such as ammonias, amines, nitriles, and isocyanates the like can be mentioned. Among them, esters of inorganic acids and ethers are preferred.

The esters of inorganic acids are preferably organosilicon compounds represented by the general formula R¹⁶ₙSi(OR¹⁷)₄₋ₙ in which R¹⁶ is a hydrocarbon group having 1 to 20 carbon atoms or hydrogen, R¹⁷ is a hydrocarbon group having 1 to 20 carbon atoms, R¹⁶ and R¹⁷ each may be different in the same molecule, and n is a number satisfying 0 ≦ n ≦ 4. The example includes tetramethoxysilane, tetraethoxysilane, tetrabutoxysilane, tetraphenoxysilane, methyltrimethoxysilane, ethyltrimethoxysilane, butyltrimethoxy silane, isobutyltrimethoxysilane, tert-butyltrimethoxysilane, isopropyltrimethoxysilane, cyclohexyltrimethoxysilane, phenyltrimethoxysilane, vinyltrimethoxysilane, dimethyldimethoxysilane, diethyldimethoxysilane, dipropyldimethoxysilane, propylmethyldimethoxysilane, diisopropyldimethoxysilane dibutyldimethoxysilane, diisobutyldimethoxysilane, di-tert-butyldimethoxysilane, butylmethyldimethoxysilane, butylethyldimethoxysilane, tert-butylmethyldimethoxysilane, tert-butylethyldimethoxysilane, tert-butyl-n-propyldimethoxysilane, isobutylisopropyldimethoxysilane, tert-butylisopropyldimethoxysilane, tert-butyl-n-butyldimethoxysilane, tert-butylisobutyldimethoxysilane, tert-butyl-sec-butyldimethoxysilane, hexylmethyldimethoxysilane, hexylethyldimethoxysilane, dodecylmethyldimethoxysilane, dicyclopentyldimethoxysilane, cylcopentylmethyldimethoxysilane, cylcopentylethyldimethoxysilane, cylcopentylisopropyldimethoxysilane, cylcopentylisobutyldimethoxysilane, cylcopentyl-tert-butyldimethoxysilane, dicyclohexyldimethoxysilane, cyclohexylmethyldimethoxysilane, cyclohexylethyldimethoxysilane, cyclohexylisopropyldimethoxysilane, cyclohexylisobutyldimethoxysilane, cyclohexyl-tert-butyldimethoxysilane, cyclohexylcyclopentyldimethoxysilane, cyclohexylphenyldimethoxysilane, diphenyldimethoxysilane, phenylmethyldimethoxysilane, phenylisopropyldimethoxysilane, phenylisobutyldimethoxysilane, phenyl-tert-butyldimethoxysilane, phenylcylcopentyldimethoxysilane, vinylmethyldimethoxysilane, methyltriethoxysilane, ethyltriethoxysilane, butyltriethoxysilane, isobutyltriethoxysilane, tert-butyltriethoxysilane, isopropyltriethoxysilane, cyclohexyltriethoxysilane, phenyltriethoxysilane, vinyltriethoxysilane, dimethyldiethoxysilane, diethyldiethoxysilane, dipropyldiethoxysilane, propylmethyldiethoxysilane, diisopropyldiethoxysilane, dibutyldiethoxysilane, diisobutyldiethoxysilane, di-tert-butyldiethoxysilane, butylmethyldiethoxysilane, butylethyldiethoxysilane, t-butylmethyldiethoxysilane, hexylmethyldiethoxysilane, hexylethyldiethoxysilane, dodecylmethyldiethoxysilane, dicyclopentyldiethoxysilane, dicyclohexyldiethoxysilane, cyclohexylmethyldiethoxysilane, cyclohexylethyldiethoxysilane, diphenyldiethoxysilane, phenylmethyldiethoxysilane, vinylmethyldiethoxysilane, ethyltriisopropoxysilane, vinyltributoxysilane, phenyltri-tert-butoxysilane, 2-norbornanetrimethoxysilane, 2-norbornanetriethoxysilane, 2-norbornanemethyldimethoxysilane, trimethylphenoxysilane, and methyltriaryloxysilane.

The ethers are preferably dialkyl ethers and diether compounds represented by the general formula: 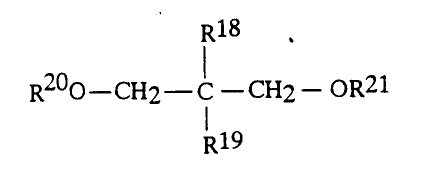 wherein R¹⁸ to R²¹ are independently straight chain or branched chain alkyl, alicyclic, aryl, alkylaryl or arylalkyl group having 1 to 20 carbon atoms and R¹⁸ or R¹⁹ may be hydrogen. The examples can include diethyl ether, dipropyl ether, diisopropyl ether, dibutyl ether, diamyl ether, diisoamyl ether, dineopenyl ether, dihexyl ether, dioctyl ether, methylbutyl ether, methylisoamyl ether, ethylisobutyl ether, 2,2-diisobutyl-1,3-dimethoxypropane, 2-isopropyl-2- isopentyl-1,3-dimethoxypropane, 2,2- bis(cyclohexylmethyl)-1,3-dimethoxypropane, 2-isopropyl-2-3,7-dimethyloctyl-1,3-dimethoxypropane, 2,2-diisopropyl-1,3-dimethoxypropane, 2-isopropyl-2-cyclohexylmethyl-1,3-dimethoxypropane, 2,2-dicyclohexyl-1,3-dimethoxypropane, 2-isopropyl-2-isobutyl-1,3-dimethoxypropane, 2,2-diisopropyl-1,3-dimethoxypropane, 2,2-dipropyl-1,3-dimethoxypropane, 2-isopropyl-2-cyclohexyl-1,3-dimethoxypropane, 2-isopropyl-2-cylcopentyl-1,3- dimethoxypropane, 2,2-dicyclopentyl-1,3-dimethoxypropane, and 2-heptyl-2-pentyl-1,3-dimethoxypropane.

Among these electron-donative compounds, organosilicon compounds represented by the general formula R²²R²³Si(OR²⁴)₂ are particularly preferred, wherein R²² is a hydrocarbon group having 3 to 20 carbon atoms in which the carbon adjacent to Si is secondary or tertiary, and the example includes branched alkyl groups such as isopropyl group, sec-butyl group, t-butyl group, and tert-amyl group, cycloalkyl groups such as cyclopentyl group, and cyclohexyl group, cycloalkenyl groups such as cyclopentenyl group, aryl groups such as phenyl group, and tolyl group. R²³ is a hydrocarbon group having 1 to 20 carbon atoms and the example includes straight chain alkyl groups such as methyl group, ethyl group, propyl group, butyl group, and pentyl group, branched alkyl groups such as isopropyl group, sec-butyl group, tert-butyl group, and tert-amyl group, cycloalkyl groups such as cyclopentyl group, and cyclohexyl group, cycloalkenyl groups such as cyclopentenyl group, aryl groups such as phenyl group, and tolyl group. R²⁴ is a hydrocarbon group having 1 to 20 carbon atoms and preferably a hydrocarbon group having 1 to 5 carbon atoms.

The example of the organosilicon compound used as such electron-donative compound includes diisopropyldimethoxysilane, diisobutyldimethoxysilane, di-tert-butyldimethoxysilane, tert-butylmethyldimethoxysilane, tert-butylethyldimethoxysilane, tert-butyl-n-propyldimethoxysilane, isobutylisopropyldimethoxysilane, tert-butylisopropyldimethoxysilane, tert-butyl-n-butyldimethoxysilane, tert-butylisobutyldimethoxysilane, tert-butyl-sec-butyldimethoxysilane dicyclopentyldimethoxysilane, cylcopentylisopropyldimethoxysilane, cylcopentylisobutyldimethoxysilane, cylcopentyl-tert-butyldimethoxysilane, dicyclohexyldimethoxysilane, cyclohexylmethyldimethoxysilane, cyclohexylethyldimethoxysilane, cyclohexylisopropyldimethoxysilane, cyclohexylisobutyldimethoxysilane, cyclohexyl-tert-butyldimethoxysilane, cyclohexylcyclopentyldimethoxysilane, cyclohexylphenyldimethoxysilane, diphenyldimethoxysilane, phenylmethyldimethoxysilane, phenylisopropyldimethoxysilane, phenylisobutyldimethoxysilane, phenyl-tert-butyldimethoxysilane, phenylcylcopentyldimethoxysilane, diisopropyldiethoxysilane, diisobutyldiethoxysilane, di-tert-butyldiethoxysilane, tert-butylmethyldiethoxysilane, dicyclopentyldiethoxysilane, dicyclohexyldiethoxysilane, cyclohexylmethyldiethoxysilane, cyclohexylethyldiethoxysilane, diphenyldiethoxysilane, phenylmethyldiethoxysilane, and 2-norbornanemethyldimethoxysilane.

### (j)Process for polymerizing olefin

The α-olefin applied to the present invention is an α-olefin having 3 or more carbon atoms and the examples include straight chain mono-olefins such as propylene, butene-1, pentene-1, hexene-1, heptene-1, octene-1, and decene-1; branched mono-olefins such as 3-methylbutene-1, 3-methylpentene-1, and 4-methylpentene-1; and vinylcyclohexane. These α-olefins may be used alone or in combination of two or more. Among these α-olefins, it is preferred to homopolymerize propylene or butene-1 or copolymerize a mixed olefin comprising propylene as the main component and it is particularly preferred to homopolymerize propylene or copolymerize the mixed olefin comprising propylene as the main component. In the copolymerization of the present invention, the mixture of ethylene and at least one α -olefin selected from the above α-olefins can be used. Furthermore, it is possible to use a compound having 2 or more unsaturated bonds such as a conjugated diene and a non-conjugated diene in the copolymerization. A hetero-block copolymerization which comprises two or more polymerization steps can be easily carried out.

The feeding of each catalyst component to a polymerization vessel is not particularly restricted except feeding in the water-free state under an inert gas such as nitrogen, or argon.

The solid catalyst component (A), the organoaluminum compound (B) and the electron donative compound (C) may be fed separately or either two of them are previously contacted and then fed.

In the present invention, it is possible to polymerize olefins in the presence of the above-mentioned catalyst but the preliminary polymerization mentioned afterward may be performed before carrying out the above polymerization (main polymerization).

The preliminary polymerization is carried out in the presence of the solid catalyst component (A) and the organoaluminum compound (B) by feeding a small amount of an olefin and is preferred to carried out in the slurry state. As a solvent used for slurring, an inert hydrocarbon such as propane, butane, isobutane, pentane, isopentane, hexane, heptane, octane, cyclohexane, benzene or toluene can be used. In the formation of slurry, a part or the all part of the inert hydrocarbon may be replaced with a liquid olefin.

The amount of the organoaluminum compound used in the preliminary polymerization can be selected from wide range as from 0.5 to 700mol per 1mol of the titanium atom in the solid catalyst component, and the amount is preferably 0.8 to 500mol, more preferably 1 to 200mol per 1mol of the titanium atom in the solid catalyst component.

The amount of the olefin to be preliminarily polymerized is 0.01 to 1000g, preferably 0.05 to 500g and particularly preferably 0.1 to 200g per 1 g of the solid catalyst component.

The slurry concentration in the preliminary polymerization is preferably 1 to 500g-the solid catalyst component/liter-solvent and particularly preferably 3 to 300g-the solid catalyst component/liter-solvent. The temperature of the preliminary polymerization is preferably -20 to 100°C, more preferably 0 to 80°C. The partial pressure of the olefin in the gas phase in the preliminary polymerization is preferably 0.01 to 20kg/cm² (1kg/cm² = 98.1kPa) and particularly 0.1 to 10kg/cm² is preferred, but this does not applied to the olefin being liquid at the pressure and temperature of the preliminary polymerization. Furthermore, the preliminary polymerization time is not particularly restricted and 2 minutes to 15 hours is usually preferred.

In carrying out the preliminary polymerization, the feeding of the solid catalyst component (A), the organoaluminum compound (B) and the olefin may be adopted either by a method for feeding the olefin after contacting the solid catalyst component (A) with the organoaluminum compound (B), or a method for feeding the organoaluminum compound (B) after contacting the solid catalyst component (A) with the olefin.

The feeding of the olefin may be adopted either by a method for feeding the olefin in order while keeping a fixed pressure in the polymerization vessel, or by a method for feeding all of a predetermined amount of olefin at the start. A chain transfer agent such as hydrogen can be added in order to control the molecular weight of a polymer to be obtained.

Furthermore, in the preliminary polymerization of a small amount of the olefin in the presence of solid catalyst component (A) and the organoaluminum compound (B), the electron donative compound (C) may, if necessary, coexist. The electron donative compound used is a part or the all part of the above-mentioned electron donative compound (C). The amount used is preferably 0.01 to 400mol, more preferably 0.02 to 200mol and particularly preferably 0.03 to 100mol per 1mol of the titanium atom contained in the solid catalyst component (A), and preferably 0.003 to 5mol, more preferably 0.005 to 3mol and particularly preferably 0.01 to 2mol per the organoaluminum compound (B).

The feeding method of the electron donating compound (C) in the preliminary polymerization is not particularly restricted. It may be fed separately from the organoaluminum compound (B) and after contacting with the organoaluminum compound (B), it may be fed. The olefin used in the preliminary polymerization may be the same or different from the olefin used in the main polymerization.

After the preliminary polymerization was carried out as mentioned above, or without performing the preliminary polymerization, the main polymerization of α-olefins can be carried out in the presence of the α-olefin polymerization catalyst comprising the above-mentioned solid catalyst component (A), the organoaluminum compound (B), and the electron donative compound (C).

The amount of the organoaluminum compound used in the main polymerization can be selected from such a wide range as from 1 to 1000mol per 1mol of the titanium atom contained in the solid catalyst component (A), and the range of 5 to 600mol per 1mol of the titanium atom contained in the solid catalyst component (A) is particularly preferred.

The amount of the electron donative compound (C) used in the present polymerization is preferably 0.1 to 2000mol, more preferably 0.3 to 1000mol and particularly preferably 0.5 to 800mol per 1mol of a titanium atom contained in the solid catalyst component (A), and preferably 0.001 to 5mol, more preferably 0.005 to 3mol and particularly preferably 0.01 to 1mol per the organoaluminum compound (B).

The main polymerization can be carried out at a temperature of -30 to 300°C and preferably 20 to 180°C. There is particularly no restriction on the polymerization pressure. However, from industrial and economical viewpoints, the pressure is preferably a normal pressure to 100kg/cm² and more preferably 2 to 50kg/cm². As the polymerization form, either of a batchwise polymerization and a continuous polymerization are possible. A slurry polymerization or a solution polymerization in an inert hydrocarbon such as propane, butane, isobutane, pentane, hexane, heptane or octane, a bulk polymerization in which liquid olefins at the polymerization temperature is used a medium, or a gas phase polymerization may be adopted.

In the main polymerization, it is possible to add a chain transfer agent such as hydrogen in order to control the molecular weight of the polymer to be produced.

### EXAMPLE

The present invention is explained in detail by Examples and Comparative Examples as follows.

The evaluating methods of various material properties of the polymer in Examples are as follows:

### (1) Xylene-soluble part at 20°C(hereinafter, abbreviated as CXS )

After dissolving 1g of the polymerization powder in 200 ml of boiling xylene, the obtained solution was slowly cooled to 50°C and successively cooled to 20°C with stirring. After allowed to stand for 3 hours at 20°C, the polymer precipitated is separated by filtration. Xylene is evaporated from the filtrate under vacuum at 60°C thereby drying and a polymer soluble in xylene at 20°C is recovered.

### (2) Intrinsic viscosity (hereinafter, abbreviated as [η])

It was measured in tetralin solvent at 135°C.

### (3) Bulk density

It was measured in accordance with JIS K-6721-1966.

### Example 1

### (a) Synthesis of solid catalyst component

After a 200ml flask equipped with a stirrer and a dropping funnel was substituted with nitrogen, 8.2g of styrene-divinylbenzene copolymer (from the result of a porosimeter measurement, the micropore volume (dVp) in a micropore radius of 100 to 5000 Å was 1.14cc/g), 41ml of toluene, 0.17ml of diisobutyl phthalate, 0.45ml of tetrabuthoxytitanium and 5.0ml of tetraethoxysilane were thrown into the flask and stirred for 2 hours at room temperature. Next, while keeping a temperature in the flask at 5°C, 11.6ml of the di-n-butyl ether solution of n-butylmagnesium chloride ( manufactured by YUKI GOSEI YAKUHIN Company Ltd. and the concentration of n-butylmagnesium chloride is 2.1mmol/ml) was gradually dropped into the flask taking 1 hour from the dropping funnel.

After completion of dropping, it was further stirred for 30 minutes at 5°C and room temperature and successively, further stirred for 3 hours at 35°C. Thereafter, after the resulting mixture was subjected to solid-liquid separation, thus obtained solid was washed repeatedly three times with 73ml of toluene and then 60ml of toluene was added thereto.

A portion of the solid product slurry was sampled and the composition analysis was carried out. A titanium atom of 0.41% by weight, ethoxy group of 9.3% by weight and butoxy group of 0.6% by weight were contained in the solid product. The slurry concentration was 0.19g/ml.

### (b) Synthesis of ester-treated solid

After taking out 21ml of toluene of the supernatant of the slurry containing the solid product obtained in the above (a), the temperature of slurry in the flask was elevated to 95°C and stirred for 1 hour. Subsequently, 3.7ml of diisobutyl phthalate was added and then the resulting mixture was subjected to reaction at 95°C for 30 minutes. After the reaction, the resulting reaction mixture was subjected to solid-liquid separation. thus obtained solid was washed twice with 73ml of toluene.

### (c) Synthesis of solid catalyst component (activating treatment)

After washing in the above (b), 39ml of toluene, 0.29ml of diisobutyl phthalate, 0.33ml of di-n-butyl ether and 39ml of titanium tetrachloride were added to the flask and reacted for 3 hours at 105°C. After the completion of the reaction, the resulting mixture was subjected to solid-liquid separation at the same temperature. The obtained solid was washed twice with 73ml of toluene at the same temperature. Next, 39ml of toluene, 0.29ml of diisobutyl phthalate, 0.33ml of di-n-butyl ether and 39ml of titanium tetrachloride were added to the washed solid and reacted for 1 hour at 105°C. After the completion of the reaction, the obtained mixture was subjected to solid-liquid separation at the same temperature and successively, after washing the separated solid three times with 73ml of toluene at the same temperature, the washed solid was washed further three times with 73ml of hexane and dried under vacuum to obtain 11.7g of the solid catalyst component.

In the solid catalyst component, a titanium atom of 0.35% by weight, the phthalate of 2.1% by weight and ethoxy group of 0.1% by weight were contained, and no butoxy group was detected.

### (d) Polymerization of propylene

A 3-liter stirring type stainless autoclave was substituted with argon, and 2.6mmol of triethylaluminum, 0.26mmol of cyclohexylethyldimethoxysilane and 43.3mg of the solid catalyst component synthesized in (c) were fed in the autoclave and hydrogen corresponding to a partial pressure of 0.33kg/cm² was added.

Subsequently, 780g of liquid propylene was fed in to the autoclave, the temperature of the autoclave was elevated to 80°C and the polymerization was carried out for 1 hour at 80°C. After the end of the polymerization, an unreacted monomer was purged. The polymer produced was dried under vacuum for 2 hours at 60°C to obtain 282g of the polypropylene powder.

Therefore, the yield of the polypropylene per 1g of the solid catalyst component (hereinafter, abbreviated as PP/Cat) was 6,510(g/g). The ratio of the xylene-soluble portion at 20°C (CXS) contained in the total yield was 0.7(wt%), the intrinsic viscosity of the polymer [η] was 1.82 and the bulk density was 0.47(g/ml).

### Comparative Example 1

### (a) Synthesis of solid catalyst component

After a 200ml flask equipped with a stirrer and a dropping funnel was substituted with nitrogen, 8.2g of styrene-divinylbenzene copolymer like as (a) in Example 1, 41ml of toluene, 0.45ml of tetrabuthoxytitanium and 5.0ml of tetraethoxysilane were thrown into the flask and stirred for 2 hours at room temperature. Next, while keeping a temperature in the flask at 5°C, 11.2ml of the di-n-butyl ether solution of n-butylmagnesium chloride ( manufactured by YUKI GOSEI YAKUHIN Company Ltd. and the concentration of n-butylmagnesium chloride is 2.1mmol/ml) was gradually dropped into the flask for 1 hour from the dropping funnel. After dropping, the resulting mixture was further stirred for 30 minutes at 5°C and room temperature and successively, further stirred for 3 hours at 35°C. Thereafter, the obtained mixture was subjected to solid-liquid separation to obtain a solid. The solid was washed repeatedly three times with 73ml of toluene, and then 60ml of toluene was added to the washed solid.

A part of the solid product slurry was sampled and the slurry was subjected to composition analysis. As results, a titanium atom of 0.44% by weight, ethoxy group of 9.6% by weight and butoxy group of 0.64% by weight were contained in the solid product. The slurry concentration was 0.19g/ml.

### (b) Synthesis of ester-treated solid

After taking out 21ml of toluene of the supernatant of the slurry containing the solid product obtained by the above (a), the temperature of the flask was elevated to 95°C and stirred for 1 hour. Next, 3.1ml of diisobutyl phthalate was added and reacted at 95°C for 30 minutes. After the reaction, the resulting mixture was subjected to solid-liquid separation and the obtained solid was washed twice with 73ml of toluene.

### (c) Synthesis of the solid catalyst component (activating treatment)

After the washing in the above (b), 39ml of toluene, 0.29ml of diisobutyl phthalate, 0.33ml of di-n-butyl ether and 39ml of titanium tetrachloride were added to the flask and reacted for 3 hours at 105°C. After completion of the reaction, the reacted mixture was subjected to solid-liquid separation at the same temperature and successively, the obtained solid was washed twice with 73ml of toluene at the same temperature. Next, 39ml of toluene, 0.29ml of diisobutyl phthalate, 0.33ml of di-n-butyl ether and 39ml of titanium tetrachloride were added and reacted for 1 hour at 105°C. After completion of the reaction, thus obtained mixture was subjected to solid-liquid separation at the same temperature and successively, the separated solid was washed three times with 73ml of toluene at the same temperature, washed further three times with 73ml of hexane and dried under vacuum to obtain 11.7g of a solid catalyst component.

In the solid catalyst component, a titanium atom of 0.51% by weight, a phthalate of 3.3% by weight, ethoxy group of 0.2% by weight and buthoxy group of 0.01% by weight were contained.

### (d) Polymerization of propylene

The polymerization of propylene was carried out in the same manner as in Example 1 (d) except using the solid catalyst component obtained in the above (c). The PP/Cat was 4,830(g/g). The CXS was 0.9(wt%), the [η] was 1.75 and the bulk density was 0.48(g/ml).

According to the present invention, there are provided an α-olefin polymerization catalyst having so high a stereoregularity and catalytic activity that the removal of the catalyst residue and amorphous polymer is unnecessary, having a high bulk density and a little fine particles and further, not containing an inorganic oxide such as a silica gel and the like causing to formation of a fish-eye in a film use, and a process for producing an α-olefin polymer having a high quality and a high stereoregularity.

## Claims

1. An α-olefin polymerization catalyst comprising:
(A) a solid catalyst component containing a tri-valent titanium compound obtained by treating a solid product obtained by reducing Ti(OR¹)ₐX₄₋ₐ ( R¹ represents a hydrocarbon group having 1 to 20 carbon atoms, X represents a halogen atom and a represents a number satisfying 0 < a ≦ 4) with an organomagnesium compound in the presence of an organosilicon compound having an Si-O bond, porous polymer beads having a micropore radius of 10 to 500 nm (100 to 5000 Å) and a micropore volume of 0.1 cm³/g (0.1cc/g) or more and an ester compound, with an ester compound, and treating the ester-treated solid with a mixture of an ether compound and titanium tetrachloride or a mixture of an ether compound, titanium tetrachloride and an ester compound;
(B) an organoaluminum compound; and
(C) an electron donative compound.

2. The α-olefin polymerization catalyst according to claim 1, wherein the organosilicon compound having an Si-O bond is a member selected from organosilicon compounds represented by the general formulae:
Si(OR²)ₘR³₄₋ₘ;
R⁴(R⁵₂SiO)ₚSiR⁶₃; and
(R⁷₂SiO)_{q}
wherein R² is a hydrocarbon group having 1 to 20 carbon atoms, each R³, R⁴, R⁵, R⁶ and R⁷ is a hydrocarbon group having 1 to 20 carbon atoms or hydrogen, m is a number satisfying 0 < m ≦ 4, p is an integer of 1 to 1000 and q is an integer of 2 to 1000.

3. The α-olefin polymerization catalyst according to claim 1 or 2, wherein the organomagnesium is a member selected from organomagnesium compounds represented by the general formulae:
R⁸MgX ; and
R⁹R¹⁰Mg
wherein each R⁸, R⁹ and R¹⁰ represents a hydrocarbon group having 1 to 20 carbon atoms and X represents a halogen.

4. The α-olefin polymerisation catalyst according to any of claims 1 to 3, wherein the ester compound used in the treatment of the reduced solid or used as the mixture of the ether compound, titanium tetrachloride and the ester compound, is a member selected from saturated aliphatic carboxylates, unsaturated aliphatic carboxylates, alicyclic carboxylates and aromatic carboxylates.

5. The α-olefin polymerisation catalyst according to any of claims 1 to 4, wherein the ether compound is a member selected from dialkyl ethers, each alkyl group having 2 to 10 carbon atoms and being the same or different each other.

6. The α-olefin polymerization catalyst according to any of claims 1 to 5, wherein the diameter of the polymer beads is 5 to 1000 µm (5 to 1000 µ).

7. The α-olefin polymerization catalyst according to any of claims 1 to 6, wherein the amount of the ester compound used in the treatment of the solid product is 0.1 to 50 mol per 1 mol of the titanium atom contained in the solid product, and 0.01 to 1.0 mol per 1 mol of the magnesium atom contained in the solid product.

8. The α-olefin polymerization catalyst according to any of claims 1 to 7, wherein the electron donative compound is a member selected from alcohols, phenols, ketones, aldehydes, carboxylic acids, esters of organic acids and inorganic acids, ethers, acid amides, acid anhydrides, ammonias, amines, nitriles and isocyanates.

9. The α-olefin polymerization catalyst according to any of claims 1 to 8, wherein the electron donative compound is a member selected from esters of inorganic acids represented by the general formula:
R¹⁶ₙSi(OR¹⁷)₄₋ₙ
wherein R¹⁶ is a hydrocarbon group having 1 to 20 carbon atoms or hydrogen, R¹⁷ is a hydrocarbon group having 1 to 20 carbon atoms, R¹⁶ and R¹⁷ each may be different in the same molecule, and n is a number satisfying 0 ≦ n < 4, and ethers represented by the general formula: 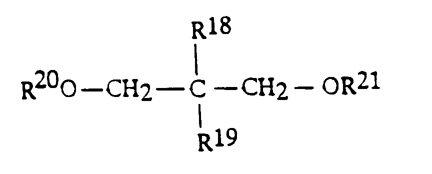 wherein R¹⁸ to R¹¹ are independently a straight chain or branched chain alkyl, alicyclic, aryl, alkylaryl or arylalkyl group having 1 to 20 carbon atoms, and R¹⁸ or R¹⁹ may be hydrogen.

10. The α-olefin polymerization catalyst according to any of claims 1 to 9, wherein the organoaluminum compound is a member selected from organoaluminum compounds represented by the general formulae:
R¹¹γAlY_{3-γ} ; and
R¹²R¹³Al-O-AlR¹⁴R¹⁵
wherein each of R¹¹ to R¹⁵ represents a hydrocarbon group having 1 to 20 carbon atoms, Y represents a halogen, hydrogen or an alkoxy group and γ is a number satisfying 2 ≦ < γ ≦ 3.

11. The α-olefin polymerization catalyst according to any of claims 1 to 10, wherein the amount of the organoaluminum compound used is 0.5 to 1000mol per 1mol of the titanium atoms contained in the solid catalyst component.

12. The α-olefin polymerization catalyst according to any of claims 1 to 11, wherein the amount of the electron donative compound (C) is 0.1 to 1000mol per 1mol of the titanium atoms contained in the solid catalyst component (A).

13. A process for producing an α-olefin polymer which comprises polymerizing an α-olefin with an α-olefin polymerization catalyst according to any of claims 1 to 12.

14. The process for producing an α-olefin polymer according to claim 13, wherein a preliminary polymerization has been carried out prior to the polymerization of the α-olefin.

15. The process for producing an α-olefin polymer according to claim 13 or 14, wherein the polymerization is carried out in the form of a slurry polymerization, a solution polymerization, a bulk polymerization or a gas phase polymerization.

## Patentansprüche

1. α-Olefin-Polymerisationskatalysator, umfassend:
(A) einen festen Katalysatorbestandteil, der eine dreiwertige Titanverbindung enthält, erhalten durch Behandeln eines festen Produktes, das durch Reduzieren von Ti(OR¹)ₐX₄₋ₐ (R¹ bedeutet einen Kohlenwasserstoffrest mit 1 bis 20 Kohlenstoffatomen, X ein Halogenatom und a eine Zahl, die der Bedingung 0 < a ≤ 4 genügt) mit einer Organomagnesiumverbindung in Gegenwart einer Organosiliciumverbindung mit einer Si-O Bindung von porösen Polymerkügelchen mit einem Mikroporenradius von 10 bis 500 nm (100 bis 5000 Å) und einem Mikroporenvolumen von 0,1 cm³/g (0,1 cc/g) oder mehr und einer Esterverbindung erhalten worden ist, mit einer Esterverbindung und Behandeln des esterbehandelten Feststoffs mit einem Gemisch einer Etherverbindung und Titantetrachlorid oder mit einem Gemisch einer Etherverbindung, Titantetrachlorid und einer Esterverbindung;
(B) eine Organoaluminiumverbindung; und
(C) eine Elektronendonotuerbindung.

2. α-Oletin-Polymerisationskatalysator nach Anspruch 1, wobei die Organosiliciumverbindung mit einer Si-O Bindung ein Vertreter, ausgewählt aus Organosiliciumverbindungen der allgemeinen Formeln:
Si(OR²)ₘR³₄₋ₘ;
R⁴(R⁵₂SiO)ₚSiR⁶₃; und
(R⁷₂SiO)_{q}
ist, wobei R² ein Kohlenwasserstoffrest mit 1 bis 20 Kohlenstoffatomen ist, R³, R⁴, R⁵, R⁶ und R⁷ jeweils einen Kohlenwasserstoffrest mit 1 bis 20 Kohlenstoffatomen oder ein Wasserstoffatom bedeuten, m eine Zahl, die der Bedingung 0 < m ≤ 4 genügt, p eine ganze Zahl von 1 bis 1000 und q eine ganze Zahl von 2 bis 1000 ist.

3. α-Olefin-Polymerisationskatalysator nach Anspruch 1 oder 2, wobei die Organomagnesiumverbindung ein Vertreter, ausgewählt aus Organomagnesiumverbindungen der allgemeinen Formeln:
R⁸MgX; und
R⁹R¹⁰Mg
ist, wobei R⁸, R⁹ und R¹⁰ jeweils einen Kohlenwasserstoffrest mit 1 bis 20 Kohlenstoffatomen bedeuten und X ein Halogenatom ist.

4. α-Olefin-Polymerisationskatalysator nach einem der Ansprüche 1 bis 3, wobei die Esterverbindung, die bei der Behandlung des reduzierten Feststoffs oder als das Gemisch der Etherverbindung, von Titantetrachlorid und der Esterverbindung verwendet wird, ein Vertreter, ausgewählt aus gesättigten aliphatischen Carboxylaten, ungesättigten aliphatischen Carboxylaten, alicyclischen Carboxylaten und aromatischen Carboxylaten ist.

5. α-Olefin-Polymerisationskatalysator nach einem der Ansprüche 1 bis 4, wobei die Etherverbindung ein Vertreter, ausgewählt aus Dialkylethern ist, wobei jeder Alkylrest 2 bis 10 Kohlenstoffatome aufweist und gleich oder verschieden von dem anderen ist.

6. α-Olefin-Polymerisationskatalysator nach einem der Ansprüche 1 bis 5, wobei der Durchmesser der Polymerkügelchen 5 bis 1000 µm (5 bis 1000 µ) beträgt.

7. α-Olefin-Polymerisationskatalysator nach einem der Ansprüche 1 bis 6, wobei die Menge der Esterverbindung, die bei der Behandlung des festen Produkts verwendet wird, 0,1 bis 50 Mol pro 1 Mol der in dem festen Produkt enthaltenen Titanatome und 0,01 bis 1,0 Mol pro 1 Mol der in dem festen Produkt enthaltenen Magnesiumatome beträgt.

8. α-Olefin-Polymerisationskatalysator nach einem der Ansprüche 1 bis 7, wobei die Elektronendonorverbindung ein Vertreter, ausgewählt aus Alkoholen, Phenolen, Ketonen, Aldehyden, Carbonsäuren, Estern von organischen Säuren und anorganischen Säuren, Ethern, Säureamiden, Säureanhydriden, Ammoniak, Aminen, Nitrilen und Isocyanaten ist.

9. α-Olefin-Polymerisationskatalysator nach einem der Ansprüche 1 bis 8, wobei die Elektronendonorverbindung ein Vertreter, ausgewählt aus Estern von anorganischen Säuren der allgemeinen Formel:
R¹⁶ₙSi(OR¹⁷)₄₋ₙ
in der R¹⁶ ein Kohlenwasserstofflest mit 1 bis 20 Kohlenstoffatomen oder ein Wasserstoffatom und R¹⁷ ein Kohlenwasserstoffrest mit 1 bis 20 Kohlenstoffatomen ist, R¹⁶ und R¹⁷ jeweils im selben Molekül unterschiedlich sein können, und n eine Zahl ist, die der Bedingung 0 ≤ n < 4 genügt, und Ethern der allgemeinen Formel: 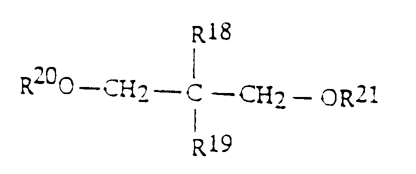 ist, in der R¹⁸ bis R²¹ unabhängig einen linearen oder verzweigten Alkyl-, alicyclischen Aryl-, Alkylaryl- oder Arylalkylrest mit 1 bis 20 Kohlenstoffatomen bedeuten und R¹⁸ oder R¹⁹ Wasserstoffatome sein können.

10. α-Olefin-Polymerisationskatalysator nach einem der Ansprüche 1 bis 9, wobei die Organoaluminiumverbindung ein Vertreter, ausgewählt aus Organoaluminiumverbindungen der allgemeinen Formeln:
R¹¹γAlY_{3-γ}; und
R¹²R¹³Al-O-AlR¹⁴R¹⁵
ist, wobei R¹¹ bis R¹⁵ jeweils einen Kohlenwasserstoffrest mit 1 bis 20 Kohlenstoffatomen bedeuten, Y ein Halogenatom, ein Wasserstoffatom oder ein Alkoxyrest ist und γ eine Zahl, die der Bedingung 2 ≤ y ≤ 3 genügt, ist.

11. α-Olefin-Polymerisationskatalysator nach einem der Ansprüche 1 bis 10, wobei die Menge der verwendeten Organoaluminiumverbindung 0,5 bis 1000 Mol pro 1 Mol der in dem festen Katalysatorbestandteil enthaltenen Titanatome beträgt.

12. α-Olefin-Polymerisationskatalysator nach einem der Ansprüche 1 bis 11, wobei die Menge der Elektronendonorverbindung (C) 0,1 bis 1000 Mol pro 1 Mol der in dem festen Katalysatorbestandteil (A) enthaltenen Titanatome beträgt.

13. Verfahren zur Herstellung eines α-Olefin-Polymers, umfassend Polymerisieren eines α-Olefins mit einem α-Olefin-Polymerisationskatalysator nach einem der Ansprüche 1 bis 12.

14. Verfahren zur Herstellung eines α-Olefin-Polymers nach Anspruch 13, wobei vor der Polymerisation des α-Olefins eine einleitende Polymerisation durchgeführt wurde.

15. Verfahren zur Herstellung eines α-Olefin-Polymers nach Anspruch 13 oder 14, wobei die Polymerisation in Form einer Suspensionspolymerisation, einer Lösungspolymerisation, einer Substanzpolymerisation oder einer Gasphasenpolymerisation durchgeführt wird.

## Revendications

1. Catalyseur de polymérisation d'α-oléfine comprenant :
(A) un constituant catalytique solide contenant un composé de titane trivalent obtenu par traitement d'un produit solide obtenu par réduction, avec un dérivé d'ester, de Ti(OR¹)ₐX₄₋ₐ (R¹ représente un groupe hydrocarboné ayant de 1 à 20 atomes de carbone, X représente un atome d'halogène et a représente un nombre satisfaisant à la relation 0 < a ≤ 4) avec un composé organomagnésien en présence d'un composé organosilicique comportant une liaison Si-O, de billes poreuses en polymère ayant un rayon de micropores compris de 10 à 500 nm (100 à 5000 Å) et un volume de micropores égal ou supérieur à 0,1 cm³/g (0,1 cc/g) et d'un composé d'ester et, ensuite, le traitement du solide traité avec l'ester avec un mélange d'un composé d'éther et de tétrachlorure de titane ou avec un mélange d'un composé d'éther, de tétrachlorure de titane et d'un composé d'ester;
(B) un composé organoaluminique; et
(C) un composé donneur d'électrons.

2. Catalyseur de polymérisation d'α-oléfine selon la revendication 1, dans lequel le composé organosilicique comportant une liaison Si-O est un produit choisi parmi les composés organosiliciques représentés par les formules générales :
Si(OR²)ₘR³₄₋ₘ;
R⁴(R⁵,SiO)ₚSiR⁶₃; et
(R⁷₂SiO)_{q}
dans lesquelles R² est un groupe hydrocarboné ayant de 1 à 20 atomes de carbone, chaque R³, R⁴, R⁵, R⁶ et R⁷ est un groupe hydrocarboné ayant de 1 à 20 atomes de carbone ou un hydrogène, m est un nombre satisfaisant à la relation 0 < m ≤ 4, p est un entier de 1 à 1000 et q est un entier de 2 à 1000.

3. Catalyseur de polymérisation d'α-oléfine selon la revendication 1 ou 2, dans lequel le composé organomagnésien est un produit choisi parmi les composés organomagnésiens représentés par les formules générales :
R⁸MgX ; et
R⁹R¹⁰Mg
dans lesquelles chaque R⁸, R⁹ et R¹⁰ représente un groupe hydrocarboné ayant de 1 à 20 atomes de carbone et X représente un halogène.

4. Catalyseur de polymérisation d'α-oléfine selon l'une quelconque des revendications 1 à 3, dans lequel le composé d'ester utilisé dans le traitement du solide réduit ou utilisé dans le mélange constitué du composé d'éther, du tétrachlorure de titane et du composé d'ester est un produit choisi parmi les carboxylates aliphatiques saturés, les carboxylates aliphatiques insaturés, les carboxylates alicycliques et les carboxylates aromatiques.

5. Catalyseur de polymérisation d'α-oléfine selon l'une quelconque des revendications 1 à 4, dans lequel le dérivé d'éther est un produit choisi parmi les éthers dialkyliques, chaque groupe alkyle ayant de 2 à 10 atomes de carbone et les groupes alkyle étant identiques ou différents les uns des autres.

6. Catalyseur de polymérisation d'α-oléfine selon l'une quelconque des revendications 1 à 5, dans lequel le diamètre des billes en polymère est de 5 à 1000 µm (entre 5 et 1000 µ).

7. Catalyseur de polymérisation d'α-oléfine selon l'une quelconque des revendications 1 à 6, dans lequel la quantité de composé d'ester utilisé dans le traitement du produit solide est de 0,1 à 50 moles pour 1 mole d'atomes de titane contenus dans le produit solide et de 0,01 à 1,0 mole pour 1 mole d'atomes de magnésium contenus dans le produit solide.

8. Catalyseur de polymérisation d'α-oléfine selon l'une quelconque des revendications 1 à 7, dans lequel le composé donneur d'électrons est un produit choisi parmi les alcools, les phénols, les cétones, les aldéhydes, les acides carboxyliques, les esters des acides organiques et des acides inorganiques, les éthers, les amides d'acide, les anhydrides d'acide, l'ammoniac, les amines, les nitriles et les isocyanates.

9. Catalyseur de polymérisation d'α-oléfine selon l'une quelconque des revendications 1 à 8, dans lequel le composé donneur d'électrons est un produit choisi parmi les esters des acides inorganiques représentés par la formule générale :
R¹⁶ₙSi(OR⁷)₄₋ₙ
dans laquelle R¹⁶ est un groupe hydrocarboné ayant de 1 à 20 atomes de carbone ou un hydrogène, R¹⁷ est un groupe hydrocarboné ayant de 1 à 20 atomes de carbone, les R¹⁶ et les R¹⁷ peuvent être différents dans la même molécule et n est un nombre satisfaisant à la relation 0 ≤ n < 4, et les éthers représentés par la formule générale : 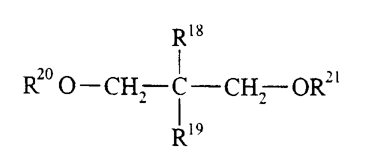 dans laquelle R¹⁸ à R²¹ sont indépendamment un groupe alkyle à chaîne droite ou à chaîne ramifiée, alicyclique, aryle, alkylaryle ou arylalkyle ayant de 1 à 20 atomes de carbone et R¹⁸ ou R¹⁹ peuvent être un hydrogène.

10. Catalyseur de polymérisation d'α-oléfine selon l'une quelconque des revendications 1 à 9, dans lequel le composé organoaluminique est un produit choisi parmi les composés organoaluminiques représentés par les formules générales :
R¹¹γAlY_{3-γ} et
R¹²R¹³Al-O-AlR¹⁴R¹⁵
dans lesquelles chaque R¹¹ à R¹⁵ représente un groupe hydrocarboné ayant de 1 à 20 atomes de carbone, Y représente un halogène, un hydrogène ou un groupe alcoxy et γ est un nombre satisfaisant à la relation 2 ≤ γ ≤ 3.

11. Catalyseur de polymérisation d'α-oléfine selon l'une quelconque des revendications 1 à 10, dans lequel la quantité de composé organoaluminique utilisé est de 0,5 à 1000 moles pour 1 mole d'atomes de titane contenus dans le constituant catalytique solide.

12. Catalyseur de polymérisation d'α-oléfine selon l'une quelconque des revendications 1 à 11, dans lequel la quantité de composé donneur d'électrons (C) est de 0,1 à 1000 moles pour 1 mole d'atomes de titane contenus dans le constituant catalytique solide (A).

13. Procédé pour la production d'un polymère d'α-oléfine qui comprend la polymérisation d'une α-oléfine avec un catalyseur de polymérisation d'α-oléfine selon l'une quelconque des revendications 1 à 12.

14. Procédé pour la production d'un polymère d'α-oléfine selon la revendication 13, dans lequel on a effectué une polymérisation préliminaire avant la polymérisation de l'α-oléfine.

15. Procédé pour la production d'un polymère d'α-oléfine selon la revendication 13 ou 14, dans lequel on effectue la polymérisation sous la forme d'une polymérisation en suspension, d'une polymérisation en solution, d'une polymérisation en masse ou d'une polymérisation en phase gazeuse.
